# EUROPÄISCHE PATENTSCHRIFT

(11) **EP 0 774 447 B1**
(45) Veröffentlichungstag und Bekanntmachung des Hinweises auf die Patenterteilung: **29.12.1999**
(21) Anmeldenummer: 96117824.1
(22) Anmeldetag: 07.11.1996
(51) Int. Cl.: C04B 35/18, C04B 38/08, C04B 38/06, C04B 33/16

(54) **Grossformatiger Schamottestein, insbesondere Zinnbadbodenstein**
Large size chamotte brick, in particular a hearth block in a tin bath
Chamotte de gros format, notamment un bloc de sole pour un bain d'étain

(30) Priorität: 16.11.1995 DE 19542700
(43) Veröffentlichungstag der Anmeldung: 21.05.1997
(73) Patentinhaber: VGT Industriekeramik GmbH, 37244 Grossalmerode (DE)
(72) Erfinder: Petschauer, Hans, 37247 Grossalmerode (DE)
(74) Vertreter: Patentanwälte Rehberg + Hüppe

(56) Entgegenhaltungen:
- EP-A- 0 558 939
- DE-A- 4 304 765
- DE-A- 4 326 615

## Beschreibung

Die Erfindung betrifft einen großformatiger Schamottestein, insbesondere Zinnbadbodenstein, mit einem blockartigen Grundkörper aus einem Werkstoff des Systems Al₂O₃ - SiO₂, der eine mit dem Zinnbad in Kontakt kommende Oberfläche aufweist, eine offene Porosität von 20 bis 25 Vol.-% und eine geschlossene Porosität besitzt, sowie eine Gasdurchlässigkeit unter 3 nPM und eine Wasserstoffdiffusion kleiner als 1,5 MPa aufweist. Weiterhin bezieht sich die Erfindung auf ein Verfahren zur Herstellung eines solchen großformatigen Schamottesteins. Solche großformatigen Schamottesteine besitzen in der Regel streng quaderförmige Gestalt mit einer dem Zinnbad zugekehrten und einer dem Zinnbad abgekehrten Oberfläche. Die dem Zinnbad abgekehrte Oberfläche stützt sich an einer meist aus Stahl bestehenden Wannenkonstruktion ab. Solche großformatigen Schamottesteine werden in bekannter Weise hergestellt, indem eine Form mit dem Werkstoff sowie ggfs. entsprechenden Zuschlägen gefüllt wird. Der Rohling wird in der Form durch Pressen gestaltverfestigt, anschließend getrocknet und gebrannt. Nach dem Brennen schließt sich in der Regel ein Schleifvorgang an, um die gewünschten Abmessungen des großformatigen Schamottesteins exakt zu erhalten.

Solche großformatigen Schamottesteine, die der Auskleidung einer Wanne für ein Zinnbad dienen und aus einem Werkstoff des Systems Al₂O₂-SiO₂ bestehen, sind aus der DE 42 06 734 C2 bekannt. Der hier interessierende Teil der Glasherstellungsanlage besitzt im unteren Bereich eine Stahlwanne, die mit den großformatigen Schamottesteinen ausgekleidet ist. Diese Wanne wird mit flüssigem Zinn gefüllt. Auf das Zinn wird das schmelzflüssige Glas aufgegossen, welches auf der Oberfläche des Zinnbades ausläuft und als dünnes, breites Band über das Zinnbad abgezogen wird. Auf diese Weise wird bekanntlich Flachglas hergestellt. Oberhalb der Oberfläche des Zinnbades herrschen dabei Temperaturen zwischen 600 und 1200°C. Bei der Herstellung von Spezialgläsern können noch höhere Temperaturen auftreten. Bei diesen höheren Temperaturen nehmen auch die großformatigen Schamottesteine - örtlich gesehen - an jeder Stelle vergleichsweise höhere Temperaturen an. Bekanntermaßen wird die Wanne, in der sich das Zinnbad befindet, von außen gekühlt, um das Zinn im Außenbereich der Schamottesteine im Bereich der Fugen zwischen den Schamottesteinen in den festen Zustand zu überführen und damit Zinndurchbrüche nach außen zu vermeiden. Bei der Herstellung von Flachglas diffundiert Na₂O in das flüssige Zinn, so daß im Zinnbad Natrium und atomarer Sauerstoff gelöst ist. Es kommt zu einem Austausch von Natrium zwischen dem Zinn und dem Werkstoff des Schamottesteins. Es kann letztlich zu Abplatzerscheinungen im Bereich der dem Zinnbad zugekehrten Oberfläche der Schamottesteine kommen. Auch besteht die Gefahr, daß im Bereich der Fuge flüssiges Zinn zwischen den Schamottesteinen eintritt bzw. durch die Fuge nach außen durchtritt. Dies wird, wie oben ausgeführt, durch eine Kühlung verhindert. Diese Kühlung muß verstärkt werden, wenn oberhalb des Zinnbades höhere Temperaturen als etwa 1000 °C auftreten. Bei der Kühlung der Wanne besteht die Gefahr, daß die Kühlung nicht gleichmäßig zur Auswirkung gebracht wird. Dies ist insbesondere dann der Fall, wenn die Kühlung ganz ausfallen sollte. In beiden Fällen schwankt dann die Temperatur des Zinnbades, was sich nachteilig auf die Qualität des hergestellten Glases auswirkt.

Die bekannten Schamottesteine besitzen eine offene Porosität, also einen Volumenprozentsatz der nach außen durchgehenden offenen Poren, der in der Regel in der Größenordnung von 20 bis 25 Vol.-% liegt. Die bekannten Steine besitzen auch eine geschlossene Porosität, also einen Volumenprozentsatz an im Innern befindlichen geschlossenen Poren.

Der Erfindung liegt die Aufgabe zugrunde, einen Schamottestein bereitzustellen, der zur Auskleidung eines Zinnbades geeignet ist, also einerseits eine hinreichende Resistenz gegen Alkalipenetration aufweist, bei dem die Luftdurchlässigkeit und die Wasserstoffdiffusion sowie die Elastizität und die mechanischen Eigenschaften im wesentlichen beibehalten sind und andererseits dennoch auch höhere Temperaturen oberhalb des Zinnbades beherrscht werden können und die Gefahr von Zinndurchbrüchen wesentlich reduziert ist.

Erfindungsgemäß wird dies dadurch erreicht, daß der Schamottestein eine geschlossene Porosität von 10 bis 15 Vol.-% aufweist. Die geschlossene Porosität ist also im Vergleich zu Schamottesteinen nach dem Stand der Technik um 10 bis 15 Vol.-% angehoben, während die offene Porosität im wesentlichen unverändert bleibt.

Die Erfindung geht von dem Gedanken aus, den Werkstoff des bekannten Schamottesteins an sich beizubehalten, einschließlich der wesentlichen mechanischen Eigenschaften und der Resistenz gegen Alkalipenetration. Insbesondere soll die Luftdurchlässigkeit unter 3 nperm liegen. Der Druckelastizitätsmodul von 3.000 bis 10.000 N/mm² soll beibehalten bleiben, ebenso die offene Porosität in der Größenordnung von 20 bis 25 Vol.-%. Die Wasserstoffdiffusion soll kleiner als 1,5 MPa bleiben. Auch die chemische und mineralogische Zusammensetzung soll unverändert beibehalten bleiben. Die Änderung im Werkstoff bezieht sich nur darauf, die geschlossene Porosität anzuheben. Die offene Porosität soll weitgehend unverändert bleiben. Auch die Porengrößenverteilung wird nicht geändert. Die Wärmeleitfähigkeit des Schamottesteins soll vermindert werden, um eine bessere Isolierwirkung zu erzielen und insoweit eine Vergrößerung der Dicke der Schamottesteine zu vermeiden. Es wird also ein Werkstoff des Systems Al₂O₃-SiO₂ eingesetzt, also ein Werkstoff mit an sich relativ hoher Wärmeleitfähigkeit. Dieser Werkstoff erhält einen Zusatz an Leichtfüllstoff und/oder Ausbrennstoff, um die hohe Wärmeleitfähigkeit zu reduzieren, wobei die Veränderung lediglich an der geschlossenen Porosität, nicht aber hinsichtlich der offenen Porosität angreift. Damit wird auch die Rohdichte des Steins verringert, und zwar von etwa 2,1 auf einen Bereich von 1,7 bis 1,8 g/cm³. Auch die Kaltdruckfestigkeit sinkt von etwa 40 auf einen Bereich zwischen 25 und 33 N/mm² ab. Der neue Schamottestein weist vorteilhaft eine um etwa 25 % verringerte Wärmeleitfähigkeit auf, so daß er unter Beibehaltung wesentlicher mechanischen Eigenschaften eine bessere Isolierwirkung erbringt. Das Gesamtgewicht wird bei unveränderten äußeren Abmessungen um ca. 15 % erniedrigt, so daß sich solche Steine auch leichter handhaben lassen.

Der Werkstoff des Grundkörpers wird also so eingestellt, daß sich eine offene Porosität von 20 bis 25 Vol.-% und eine Gesamtporosität von 30 bis 40 Vol.-% einstellt. Die offene Porosität bleibt dabei im wesentlichen bewußt unverändert, um die Wasserstoffdiffusionswerte und die Luftdurchlässigkeit nicht nachteilig zu verändern.

Bei der Herstellung des großformatigen Schamottesteins wird dem Werkstoff des Grundkörpers bis zu 15 Gew.-% Leichtfüllstoff und/oder Ausbrennstoff hinzugefügt, so daß die geschlossene Porosität um 10 bis 15 Vol.-% angehoben wird, während die offene Porosität im wesentlichen unverändert bleibt. Es versteht sich, daß auch eine Kombination mehrerer Leichtfüllstoffe und/oder Ausbrennstoffe angewendet werden können. Der jeweils einzusetzende Anteil richtet sich auch nach der Art und der Gestalt des Leichtfüllstoffs und/oder Ausbrennstoffs. Es wird also gezielt nur die geschlossene Porosität gesteigert, nicht aber die offene Porosität. Dies geschieht durch Zugabe von Leichtfüllstoffen, also Stoffen, die auch nach dem Brennvorgang noch vorhanden sind. Es können auch Ausbrennstoffe bei der Herstellung hinzugefügt werden, die durch das Brennen verschwinden bzw. letztlich Lufthohlräume in Porengestalt im Schamottestein zurücklassen. Der Anteil der Leichtfüllstoffe und/oder der Ausbrennstoffe beträgt bis zu 15 Gew.-%, wobei im allgemeinen bereits Anteile von 8 bis 12 Gew.-% ein sinnvolles Ergebnis erbringen.

Es ist sinnvoll, wenn der Schamottestein den Leichtfüllstoff und/oder den Ausbrennstoff in feinkörniger Form zugegeben enthält bzw. enthalten hat. Unter Beibehaltung der Porengrößenverteilung ist es sinnvoll, den Leichtfüllstoff und/oder den Ausbrennstoff feinkörnig zuzugeben, letztlich um einen feinporigen Schamottestein zu erzielen, dessen physikalische Eigenschaften, insbesondere die Kombination aus Luftdurchlässigkeit und Wasserstoffdiffusion nicht geändert sind. Insbesondere kann der Leichtfüllstoff und/oder der Ausbrennstoff in feinkörniger Form unter 500 µm zugegeben werden.

Der Werkstoff des Grundkörpers kann zusätzlich zu dem Leichtfüllstoff und/oder Ausbrennstoff einen Schaumbildner aufweisen. Dabei handelt es sich um organische Stoffe, die eine erstaunliche Gestaltfestigkeit besitzen und insoweit auch bei der Formgebung und beim Pressen des Rohlings ihre Gestalt kaum verändern.

Insbesondere ist es möglich, daß der Schamottestein als Zweischichtstein ausgebildet ist und den Leichtfüllstoff und/oder den Ausbrennstoff nur in einer dem Zinnbad abgekehrten Schicht enthält bzw. enthalten hat. Dies zielt darauf ab, eine erste, dem Zinnbad zugekehrte Oberfläche zu schaffen, die vergleichsweise dicht ausgebildet ist, während die zweite, der Wannenkonstruktion zugekehrte Schicht eine verbesserte Isolierwirkung besitzt. Die damit geschaffene Schutzschicht kann auch eine geringere Dicke aufweisen als die insoweit geschaffene und dahinter befindliche Isolierschicht.

Die Erfindung wird anhand verschiedener Ausführungsbeispiele im Vergleich zum Stand der Technik weiter erläutert und beschrieben. Aus der nachfolgenden Tabelle können die wesentlichen Eigenschaften entnommen werden. In der ersten Spalte (StdT) ist ein Beispiel aus dem stand der Technik gemäß der DE 42 06 734 C2 gegeben. In den anschließenden vier Spalten I bis IV sind die Werte von Ausführungsbeispielen des neuen großformatigen Schamottesteins angegeben:

| | | StdT | I | II | III | IV |
|---|---|---|---|---|---|---|
| Rohdichte | g/cm³ | 2,12 | 1,76 | 1,80 | 1,79 | 1,77 |
| off. Porosität | Vol.-% | 22,1 | 22,20 | 21,09 | 21,52 | 22,31 |
| Gesamtporosität | Vol.-% | 22,7 | 34,80 | 34,06 | 34,43 | 35,16 |
| Kaltdruckfestigk. | N/mm² | 47 | 26,4 | 33,0 | 32,2 | 28,9 |
| Gasdurchlässigk. | nPm | 2,05 | 1,22 | 0,86 | 1,01 | 1,24 |
| H₂-Diffusion | Pa | 912 | 706 | 893 | 834 | 746 |
| spez. Gewicht | g/cm³ | 2,74 | 2,72 | 2,73 | 2,73 | 2,73 |

Bei dem als Stand der Technik angegebenen Beispiel beträgt die Wärmeleitfähigkeit in W/m.°K im Vergleich zum Ausführungsbeispiel I folgendes:

| | SdT | I |
|---|---|---|
| bei 300°C | 1,443 | 1,089 |
| bei 600°C | 1,545 | 1,198 |
| bei 900°C | 1,644 | 1,207 |

Man erkennt, daß die Wärmeleitfähigkeit etwa um 25 % geringer ist, also der Schamottestein eine verbesserte Isolierwirkung aufweist.

Die chemische Analyse des Ausführungsbeispiels I ergibt folgende Gewichtsprozentanteile:

| | |
|---|---|
| SiO₂ | 56,42 Gew.-% |
| Al₂O₃ | 38,47 Gew.-% |
| TiO₂ | 1,58 Gew.-% |
| Fe₂O₃ | 0,83 Gew.-% |
| Na₂O | 0,86 Gew.-% |
| K₂O | 0,70 Gew.-% |
| CaO | 0,52 Gew.-% |
| MgO | 0,11 Gew.-% |

## Patentansprüche

1. Großformatiger Schamottestein, insbesondere Zinnbadbodenstein, mit einem blockartigen Grundkörper aus einem Werkstoff des Systems Al₂O₃ - SiO₂, der eine mit dem Zinnbad in Kontakt kommende Oberfläche aufweist, eine offene Porosität von 20 bis 25 Vol.-% und eine geschlossene Porosität besitzt, sowie eine Gasdurchlässigkeit unter 3 nperm und eine Wasserstoffdiffusion kleiner als 1,5 MPa aufweist, dadurch gekennzeichnet, daß der Schamottestein eine geschlossene Porosität von 10 bis 15 Vol.-% aufweist.

2. Schamottestein nach Anspruch 1, **dadurch gekennzeichnet**, daß der Schamottestein eine Rohdichte von 1,7 bis 1,8 g/cm3 und eine Kaltdruckfestigkeit von 25 bis 33 N/mm² aufweist.

3. Verfahren zur Herstellung eines großformatigen Schamottesteins nach einem der Ansprüche 1 oder 2, **dadurch gekennzeichnet,** daß dem Werkstoff des Grundkörpers bei seiner Herstellung bis zu 15 Gew.-% Leichtfüllstoff und/oder Ausbrennstoff hinzugefügt wird, so daß die geschlossene Porosität um 10 bis 15 Vol.-% angehoben wird.

4. Verfahren nach Anspruch 3, **dadurch gekennzeichnet**, daß der Leichtfüllstoff und/oder der Ausbrennstoff in feinkörniger Form zugegeben wird.

5. Verfahren nach Anspruch 4, **dadurch gekennzeichnet**, daß der Leichtfüllstoff und/oder der Ausbrennstoff in feinkörniger Form unter 500 µm zugegeben wird.

6. Verfahren nach Anspruch 3, 4 oder 5, **dadurch gekennzeichnet**, daß dem Werkstoff des Grundkörpers bei seiner Herstellung zusätzlich ein Schaumbildner zugegeben wird.

7. Verfahren nach einem der Ansprüche 3 bis 6, **dadurch gekennzeichnet**, daß der Schamottestein als Zweischichtstein ausgebildet wird und der Leichtfüllstoff und/oder der Ausbrennstoff nur der Werkstoffschicht zugegeben wird, die dem Zinnbad abgekehrt ist.

## Claims

1. A large format fireclay refractory brick, in particular a bottom block for a tin bath, including a block made of a material of the system Al₂O₃ - SiO₂, having a surface contacting the tin bath, having an open porosity of 20 to 25 percent by volume and a closed porosity, and having a gas permeability less than 3 nperm and a H₂ diffusion less than 1,5 MPa, **characterized in** that the fireclay refractory brick has a closed porosity of 10 to 15 percent by volume.

2. The fireclay refractory brick of claim 1, **characterized in** that the fireclay refractory brick has a raw unit weight of 1,7 to 1,8 g/cm³ and a cold crushing strength of 25 to 33 N/mm².

3. A method of producing a large format refractory brick of one of claims 1 or 2, **characterized in** that lightweight filling material and/or opening material up to 15 percent by volume is added to the material of the block during its production, so that the closed porosity is increased by 10 to 15 percent by volume.

4. The method of claim 3, **characterized in** that the lightweight filling material and/or of the opening material is added in a fine grain sized form,

5. The method of claim 4, **characterized in** that the lightweight filling material and/or of the opening material is added in a fine grain sized form less than 500 µm.

6. The method of claim 3, 4 or 5, **characterized in** that a foaming agent is additinally added to the material of the block during its production.

7. The method of one of claims 3 to 6, **characterized in** that the fireclay refractory brick is formed as a block including two layers, and the lightweight filling material and/or the opening material is only added to the layer of the material facing away from the tin bath.

## Revendications

1. Brique de chamotte de grand format, en particulier un bloc de sole pour bains d'étain, avec un corps de base en forme de parallélipipède fait d'un matériau faisant partie du système Al₂O₃-SiO₂ qui présente une surface venant en contact avec le bain d'étain, une porosité apparente de 20 à 25 % en volume et une porosité fermée ainsi qu'une perméabilité aux gaz de moins de 3 nperm et une diffusion d'hydrogène inférieure à 1,5 MPa, **caractérisée en ce que** la brique de chamotte présente une porosité fermée de 10 à 15 % en volume,

2. Brique de chamotte suivant la revendication 1, **caractérisée en ce que** la brique de chamotte a une densité brute variant de 1,7 à 1,8 g/cm³ et une résistance à la pression à froid de 25 à 33 N/mm².

3. Procédé pour la fabrication d'une brique de chamotte de grand format suivant l'une quelconque des revendications 1 ou 2, **caractérisé en ce qu**'il est ajouté lors de sa fabrication au matériau de base du bloc jusqu'à 15% d'un matériau de charge léger et/ou d'un matériau de combustion, de telle sorte que la porosité fermée est augmentée de 10 à 15% en volume.

4. Procédé suivant la revendication 3, **caractérisé en ce qu**'un matériau de charge léger et/ou un matériau de combustion sont ajoutés sous forme de grains fins.

5. Procédé suivant la revendication 4, **caractérisé en ce que** le matériau de charge léger et /ou le matériau de combustion sont ajoutés sous forme de grains fins plus petits que 500µm

6. Procédé suivant l'une quelconque des revendications 3, 4 ou 5, **caractérisé en ce qu**'il est également ajouté un agent moussant aux matériaux de base du bloc lors de sa fabrication.

7. Procédé suivant l'une quelconque des revendications 3 à 6, **caractérisé en ce que** la brique de chamotte a la forme d'une brique à double couche et que le matériau de charge léger et un matériau de combustion n'est ajouté qu'à la couche de matériau qui se trouve du côté opposé à celui tourné vers le bain d'étain.
